# EUROPEAN PATENT APPLICATION

(11) **EP 3 981 499 A1**
(43) Date of publication of application: **13.04.2022**
(21) Application number: 20202719.9
(22) Date of filing: 20.10.2020
(51) Int. Cl.: B01D 53/04, B01D 46/30, B01D 53/26

(54) **COMPENSATION AND STABILISATION SYSTEM FOR AN ADSORPTION AND FILTRATION BED**

(30) Priority: 06.10.2020 IT 202000023548
(71) Applicant: MST Engineering Dell'ing. Francesco Marzaro, 30030 Caltana di Santa Maria di Sala (VE) (IT)
(72) Inventor: Marzaro, Francesco, 30030 Caltana di Santa Maria di Sala (VE) (IT); Bertoldo, Gianluca, 30030 Caltana di SAnta Maria di Sala (VE) (IT)
(74) Representative: Vinci, Marcello

(57) **Abstract**

The present patent relates to a compensation system for adsorbent and/or filtering beds (4), particularly for process fluid (W) dehumidification and/or filtration systems comprising a tower (5) for treating said fluid (W), which contains at least one bed of adsorbent and/or filtering material (4), at least one compensation device (6) to stabilize said bed of adsorbent or filtering material (4). Said compensation device (6) is pneumatic or fluid-dynamic in general, and is configured to exert, directly or indirectly, defined pressure values on said bed of adsorbent and/or filtering material (4).

## Description

### Field of application

The present invention relates to a method and relative system for compensating the adsorbent or filtering bed which can also be used for the dehumidification of a process fluid, air and its mixtures, compressed fluids and in particular of fluids used in the plastic materials dehumidification process.

In particular, the invention which is the subject of the present patent application is also applicable in the sector of systems and devices for the dehumidification of granular material.

### State of the art

As is known, plastic material, in the form of granules or flakes, is transformed into finished or semi-finished products by heating, casting, molding or extrusion.

As is also known, plastics, due to their hygroscopicity, contain water molecules; during the melting processes water molecules can compromise the polymeric structure of the plastic materials themselves, causing surface or structural defects of a finished or semi-finished product, compromising the quality of the final product.

It follows that, in order to prevent the formation of bubbles and cavities in the plastic material and any alterations in its chemical structure, it is absolutely necessary to control the moisture content of the granules and thus the dehumidification process, during the transformation of plastic materials.

In order to extract moisture from plastic material various drying fluids are currently used to treat it.

In the dehumidification systems currently used, a certain amount of plastic material to be dehumidified is introduced into a hopper in which the material is subjected to the action of the drying fluid, called process fluid, which removes the moisture.

The process fluid is conveyed by process fluid generators, typically air or air/nitrogen mixtures, known in jargon as the *"dryer".*

Once the fluid is introduced into the container where the plastic material is stored, it passes through the plastic mass, removing the moisture.

Achieving the optimal degree of dehumidification for a given plastic material that will subsequently be subjected to melting is conditioned by numerous factors including the amount of time of the material remains in the hopper, the flow rate of the process fluid, the treatment temperature, and the dew point of the process fluid.

To modify the residual moisture that the granular material retains at the end of the dehumidification treatment, the amount of time it remains in the hopper and the characteristics of the process fluid can be altered as can the specific flow rate, the temperature, and the dew point.

Note that the dew point is that thermodynamic state in which, at a certain temperature and a certain pressure, a fluid-vapor mixture becomes saturated with water vapor.

Therefore, the dew point temperature in our case, hereinafter referred to as DP, means the temperature at which, at a given pressure, the process fluid is saturated with water vapor.

It follows that the DP value of the fluid used for the dehumidification of the plastic material is a parameter of paramount importance in the management of the process.

By way of example, the description of a typical dehumidification process in PET transformation processes is provided below.

As is well known, a dehumidification fluid (air/nitrogen mixtures etc.) with a DP indicatively in the range of -80°C to -20°C is used for the transformation processes of plastic materials.

*Table 1* below shows indicative values of the parameters of a known process by way of example.

**Table 1**

| | |
|---|---|
| Delivery pressure Pm (measured at the dryer outlet) | 1.2 bar > Pm > 1.05 bar |
| Return pressure Pr at the dryer inlet | 1.0 bar > Pr > 0.9 bar |
| Temperature Td of the towers in the dryer | 40°C < Td < 70°C |
| Temperature Tm of fluid delivery at the hopper | 80°C < Tm < 200°C. |

Inside the dryer, there are special towers containing the adsorbent material (molecular sieve, silica gel, etc.) capable of retaining the humidity present in the fluid.

### Detailed description

In the description and the claims reference will be made to a process flow for carrying out the dehumidification of the plastic or granular material; it is understood that the expression "process fluid" is not limited to the use of air but also includes the use of other treatment fluids suitable for the purpose and that this process fluid could also be used for purposes other than the dehumidification of the plastic material.

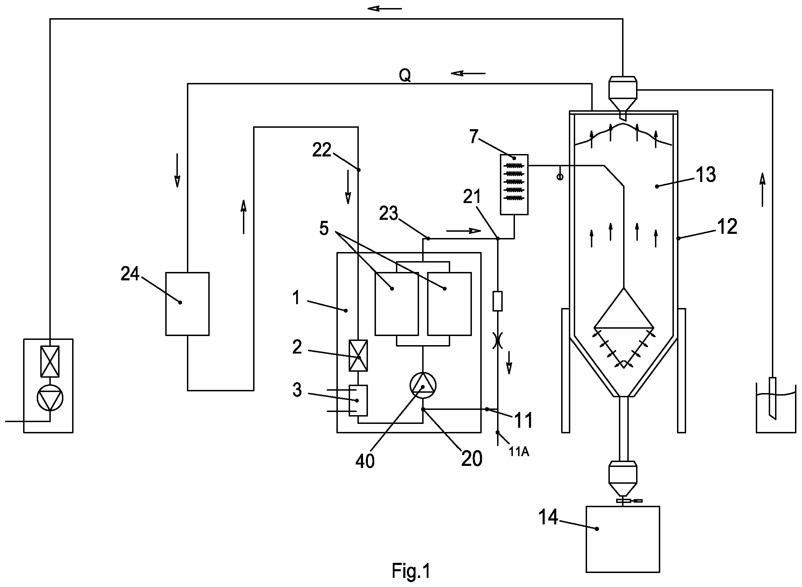

In an example shown in Figure 1, a generic dehumidification system comprises at least one generator (1) of dry fluid, called a dryer, inside which there are:
- special towers (5) containing adsorbent material capable of retaining the humidity present in the process fluid;
- at least one filter (2);
- at least one cooler (3);
- at least one return point (20);
- at least one intake point (21);

It is specified that the intake point (21) and the return point (20) can also be located in different points of the dehumidification system, based on specific application needs and that the return point (20) may not be present if an open measurement circuit in the environment (11A) is used, as shown with a dashed line in Figure 1.

The standard dehumidification system typically used in the usual practice also includes:
- at least one hopper (12) in which the plastic material (13) is stored;
- at least one heater (7);
- at least one delivery pipe (23);
- at least one return circuit (22);
- at least one pump or blower (40).

Generally the fluid leaving the dryer (1) is sent by means of the delivery pipe (6) to a heater (7).

From the heater (7) the fluid is sent inside the hopper (12) by means of a generic diffuser so as to pass through the plastic material (13) contained therein.

When it reaches the top of the hopper (12), the process fluid loaded with the humidity absorbed from the plastic material (13) passes through the return circuit (22) with a specific flow rate Q and is then sent back to the dryer (1).

The fluid is once again pushed by the pump (4) into the towers (5), along the delivery circuit (23), then to the heater (7), the hopper (12) and the return circuit (22), to ensure that the material (13) reaches the temperature/humidity conditions required by the transformation machine (14).

For the reasons already noted, the process fluid leaving the towers should optimally have a specific DP generally < -20°C.

In order to minimize powders and organic compounds released from the plastic material treated in the hopper from entering the adsorbent towers (5), a filter (24) may be provided at the inlet to the dryer.

This filter can assume the configuration of an adsorbent tower and be filled with special filter materials in granular form (activated carbon, etc.) with the task of eliminating harmful contaminants for the adsorbent material used in the dehumidification towers.

If this filter (24) is configured as an adsorbent tower, it can use the same pneumatic stabilization system as set forth in the present patent application.

*Table 2* shows the typical parameters of Pressure, Flow Rate and Temperature under which adsorbent towers usually operate:

**Table 2**

| | |
|---|---|
| Pressure Pm | 1.0 bar < P < 1.2 bar |
| Qm flow rate | 30 m³/h < Qm < 5000 m³/h |
| DP flow | -30°C > DP > -80°C |
| Ta Operating ambient temperature | 40°C < Ta < 50°C |
| Tp towers process temperature | 40°C < Tp < 70°C |
| Ta towers regeneration temperature | 150°C < Ta < 250°C |

*Table 3* shows the correlation between the quantity of H₂O and DP at a pressure of 1 bar.

**Table 3**

| DP (°C) | H₂O (ppm) |
|---|---|
| -80° | 0.526 |
| -70° | 2.55 |
| -60°C | 10.6 |
| -50°C | 38.8 |
| -40°C | 127 |
| -30°C | 376 |

Table 3 shows how the quantity of H₂O at DP = -80°C is < 1/200 of that present at DP -40°C.

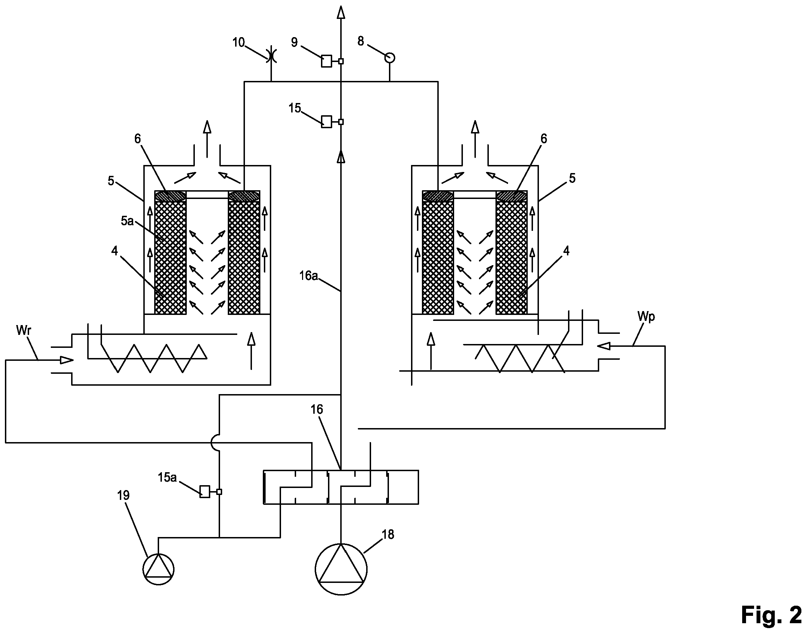

Figure 2 shows the configuration of a typical adsorbent tower system. In order to ensure the maximum efficiency of the dehumidification process, the process flow (W) that passes through the adsorbent towers (5) must not have preferential pathways inside them and at the same time must have limited head loss in order to obtain the required air flows with the minimum expenditure of energy.

In the known art, the adsorbent towers, placed inside said dryer (1), are filled with a suitable quantity of adsorbent material (4) which generally has an almost spherical shape and is enclosed inside suitable cylinders or "canisters" (5a) through which the process/regeneration air flow (Wp, Wr) passes.

In the known art, the flow (Wp, Wr) that passes through the cylinders (5a) containing the adsorbent material can be axial or, more frequently, radial, which facilitates the creation of stable adsorbent beds with limited process flow head losses. These configurations are, however, indicative and not exhaustive of the possible configurations that this adsorbent bed can have in the static adsorbent towers. In fact, in dynamic adsorbent towers the adsorbent material, in the form of microgranules, is sintered directly to a support and is not the object of this patent application.

Once the moisture transferred from the plastic material (13) to the process flow is absorbed in the towers (5) to the point that the adsorbent material (4) is saturated, the latter must then be regenerated in order to ensure continuity to the process.

It follows that the technique described in the known art generally involves the use of dryers with at least 2 adsorbent towers (5) used alternately: while one tower works to dry the process flow, at least one other tower is regenerated to be ready for use once the tower in use becomes saturated with moisture.

In the prior art, the regeneration of the adsorbent material (molecular sieves, silica gel, etc.) is carried out by heating it to suitable temperatures (150 - 250°C) to release the moisture retained in the sieves, and then cooling it to temperatures suitable to allow the adsorption of humidity from the process flow.

The regeneration and process flows, the heating and cooling thermal cycles, and the absorption and release of humidity cause the expansion and settling of the materials making up the adsorbent bed (4).

In order to keep the adsorbent bed stable and to minimize vibrations and rubbing between the particles constituting the bed itself, in the prior art a ballast is placed above the bed in order to stabilize it.

The weight force of the ballast, which in currently known systems generally consists of spheres, metal discs or other inert materials, compresses the adsorbent material and stabilizes it during its natural cyclical change in volume and prevents the air flows from causing vibrations and rubbing between the particles.

In the prior art, the ballast can reach and exceed by 50% the weight of the adsorbent material.

In view of its simplicity and reliability, the compensation system in the prior art leads to some disadvantages listed below:
1) absorption of heating energy;
2) absorption of cooling energy;
3) limitation of compensation over time;
4) extension of the adsorbent bed regeneration times.
   1) Since in the regeneration phase it is necessary to bring the entire mass of the tower (5) to a suitable temperature, it is necessary to heat and cool the inert material constituting the ballast as well. This involves a waste of energy resulting in higher dryer operating costs and therefore of the dehumidification process.
   2) Similarly, once the towers are heated for their regeneration (150-250°C) it is then necessary to use energy to cool them to temperatures suitable for their intended operation (50-70°C).
   3) In general, especially in the case of a metal ballast, there is a tendency for the ballast itself to consolidate, with the resulting reduction of its compensation capacity.
   4) The time required for the heating and cooling of the adsorbent tower (5) is proportional to its mass as well as to the quantity of H₂O contained; it follows that the quantity of ballast significantly affects the required tower regeneration time.

Therefore, in order to overcome the limitations imposed by the compensation system used in the prior art, a new system was developed which uses a pneumatic compensator to create the compensation force.

Therefore, the object of the present patent is a new method and the relative compensation system of an adsorbent or filtering bed for the dehumidification and/or filtration of a process fluid, particularly usable in a system for the dehumidification of granular plastic material.

The new system offers a series of advantages:
1. the energy needed for the cooling process is reduced;
2. the compensation capacity does not tend to reduce over time due to the agglomeration of the material constituting the ballast;
3. the reduction of adsorbent bed regeneration times;
4. the weight of the towers is reduced;
5. the compensation capacity can be increased compared to the methods used in the prior art and can be equivalent to at least 2 to 4 times the weight of the ballast usually used;
6. the compensation force can be modulated and managed according to the needs and mechanical resistance limits of the tower structure and the adsorbent material.

The use of the new compensation system therefore facilitates the extension of the adsorbent material maintenance/replacement interval since continuous and appropriate pressure on the adsorbent material can be guaranteed over time resulting in less friction and wear of the adsorbent particles themselves.

The compensation capacity provided by metal or other inert static masses, as occurs in the prior art, tends to decrease slightly over time due to compaction phenomena or to the displacement of the elements of the ballast which hinder its free movement by means of gravity.

The compensation system which is the object of this patent comprises:
- a tower (5) or container, designed to contain at least one bed of adsorbent and/or filtering material (4);
- means for introducing a process fluid (W) into said tower (5) or container;
- means for discharging said process fluid (W) from inside said tower (5) or container;
- means for conveying said process fluid (W) inside said tower (5) or container through said bed of adsorbent and/or filtering material (4);
- at least one compensation device (6) suited to keep said bed of adsorbent and/or filtering material (4) stable inside said tower (5) or container,
   and wherein said at least one compensation device (6) is fluid-dynamic, and more preferably pneumatic, and is configured to exert, directly or indirectly, a predefined amount of pressure on said bed of adsorbent and/or filtering material (4).

A pneumatic device is understood to be a device or mechanism driven by a gaseous fluid, but the same inventive concept is applicable by using an incompressible fluid, such as a liquid, which can be successfully used in systems that work at operating temperatures, for example, below 100°C.

In plastic granule dehumidification plants, where the operating temperatures are much higher, it is more appropriate to use gaseous fluids.

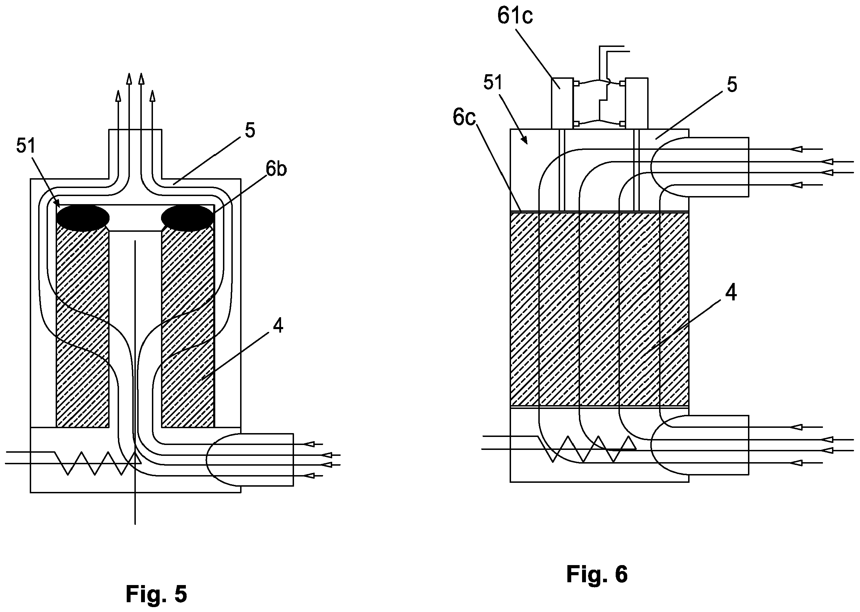

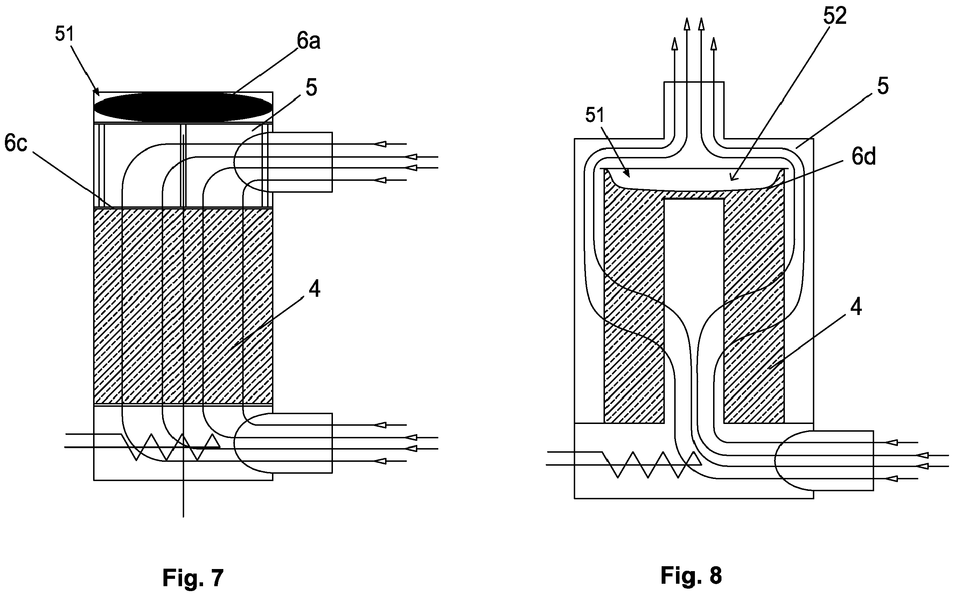

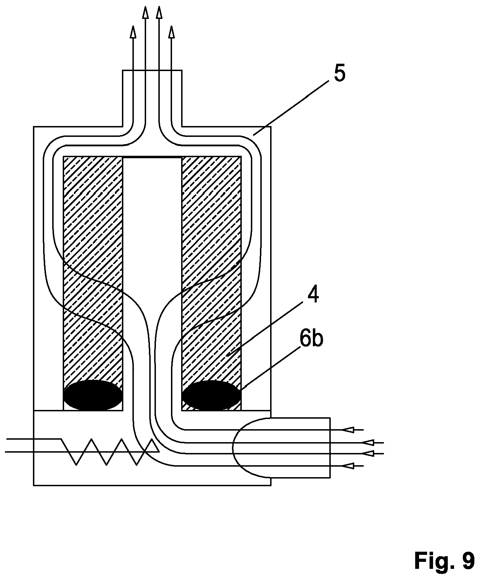

Figures 4 to 9 show embodiments of the new compensation system and in particular the following possible embodiments of the compensation device (6):

Figure 4: the compensation system comprises an inflatable element (6a) which exerts a certain amount of pressure directly on the bed of adsorbent and/or filtering material (4);

Figure 5: the compensation system comprises a toroidal-shaped inflatable element (6b) which exerts a certain amount of pressure directly on the bed of adsorbent and/or filtering material (4);

Figure 6: the compensation system comprises a movable head (6c) with one or more pneumatic cylinders (61c) which exerts a certain amount of pressure directly on the bed of adsorbent and/or filtering material (4);

Figure 7: the compensation system comprises the same mobile head (6c) as in Figure 6, however, it is moved by an inflatable element (6a) of the type shown in Figure 4.

Figure 8: the compensation system comprises a membrane (6d) which creates a chamber (52) under pressure.

Figure 9: the compensation system comprises an inflatable element (6b), in the example toroidal in shape, which exerts a certain amount of pressure directly on the bed of adsorbent and/or filter material (4), from below.

Using the new compensation system with a pneumatic device as described in the present patent, the reduction phenomena of the compensation capacity, which occurs using the ballast technique in the prior art, is almost totally prevented and it is also possible to develop compensator pressurization cycles, in order to recompact the adsorbent bed at set intervals.

In the prior art, the compensation capacity is provided by the weight force exerted by the ballast on the adsorbent bed (4).

In the prior art, referring for example to the adsorbent towers used in PET, a ballast of about 60 kg is generally used to compensate for a quantity of filtering material of about 100 kg.

Hence, indicatively but not exclusively, an adsorbent tower with a toroidal section, as schematized in Figure 2, is equal to 3,000 square centimeters.

A metal compensation ballast with weight P = 60 kg is used.

Using a pneumatic compensation system applied as described in the present application, it is possible to create the same force with pressure equal to 0.02 Kg/cm² (bar) applied to the given section (3,000 cm²).

Thus the pressure necessary to stabilize the adsorbent bed (4) can be obtained using compressed air, typically available in industrial sites or by directly using the pumps (40) in the dryers.

In fact, dryers are usually equipped with pumps with average gauge pressures in the order of 0.15 bar. Thus it is clear that there is a very large margin to manage the new pneumatic compensation system using a pressure source already available in the plant in which the system is installed.

First of all, if needed, the obtainable force (F) can be increased with respect to that typically used in the technique in the prior art.

The compensation device (6) is driven by a pressurized fluid (16a), supplied by pumps (18, 19) or by external sources of compressed air (17).

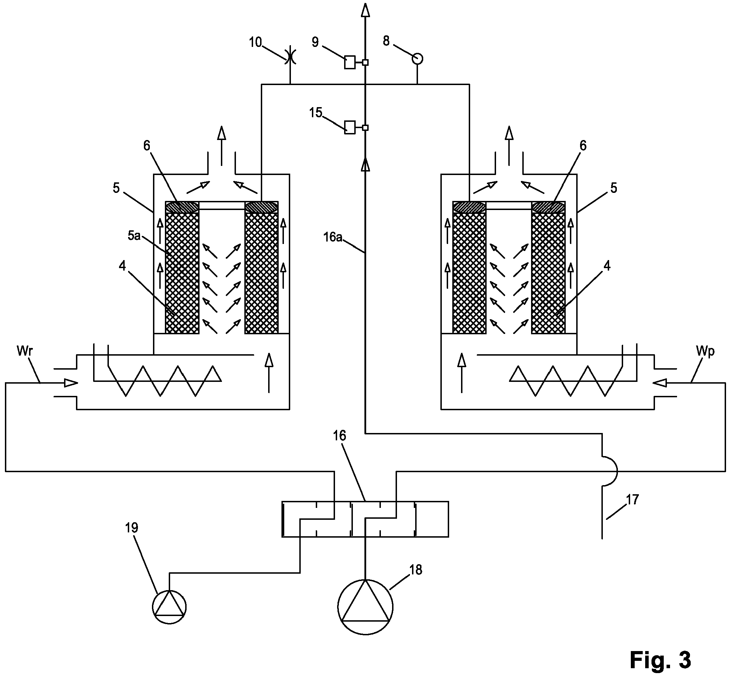

As shown in Figure 2, it is possible to regulate the pressure of the pneumatic compensation device (6b) by means of one or more supply valves (15-15a) connected to the supply line (16) of said one or more pumps (18, 19) and a discharge valve (9), but the same inventive concept is also applicable for the other embodiments. Similarly, as shown in Figure 3, it is possible to connect said one or more supply valves (15) to an external source (17) of compressed fluid.

It is therefore possible to pressurize the pneumatic compensation device (6) to a pressure value set with the supply valve (15, 15a) connected to the pumps' supply line (16) or to another available source, and keep the pressure value p constant as the temperature varies by using the drain valve (9).

The new compensation system can therefore be managed according to the value read by at least one pressure gauge (8), connected to the compensation system.

A calibrated drain valve (10) may also be used as an additional safety element for the system.

The new compensation system can have different configurations and, indicatively but not exhaustively, that of a discoidal (6a) or toroidal (6b) inflatable element, or of a disk (6c) placed above the bed of adsorbent material, in the compartment that in the prior art is typically occupied by the ballast.

If the new pneumatic compensation system is installed on an existing drying tower, thanks to the elimination of the ballast it is possible to increase the quantity of adsorbent material (approximately + 5-8%) with the result that the filter lasts approximately 4-5% longer.

### CALCULATION OF ENERGY SAVINGS IN HEATING

In the technique of the prior art, citing for example the plastics sector, the tower regeneration cycle consists of a phase where the adsorbent bed is heated up to 250°C with a subsequent cooling down phase to the process temperature (about 50-60°C).

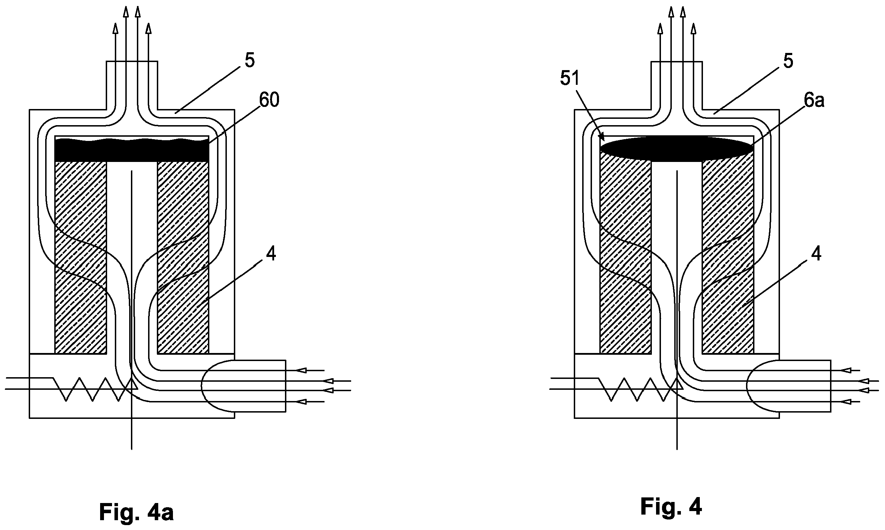

See Figure 4a, which shows an example of the prior art, with a traditional ballast (60), and Figure 4.

Given a 50 kg steel tower (5).

Given a quantity of adsorbent material (4) equal to 100 kg saturated with H₂O at 8% by weight, that is, 8 kg H₂O total contained in the tower (5).

Given a traditional metal ballast (60) equal to 60 kg.

We can calculate the energy needed to heat and cool the ballast (60) during a regeneration cycle:
Given a Specific Heat cs = 0.114 Kcal/kg/°K if the material is iron;
Given a DT = 200°C for the heating cycle
Given a process efficiency η = 0.9 due to dispersions
Given the Specific Heat of the absorbent material of cs = 0.229 kcal/kg/°K
Given a latent heat of evaporation of the H₂O = 1000 kcal/kg
The sensible heat necessary for heating the ballast is: E1 (kW) = 60 x 0.114 x 200 / 0.9 / 860 = 1.77 kW
The total energy saved by adopting the new compensation system is therefore: E1 = 1.77 kW
The energy required for heating the tower is:
   E2 (kW) = 50 x 0.114 x 200 / 0.9 / 860 = 1.47 kW

The energy required for heating the adsorbent material contained in the tower is:
E3 (kW) = 100 x 0.229 x 200 / 0.9 / 860 = 5.92 kW

The energy required for the extraction of H₂O from 100 kg of 8% saturated adsorbent material is approximately equal to:
E4 (kW) = 100 x 0.08 x 1000 / 0.9 / 860 = 10.33 kW

The total energy required for the regeneration of the adsorbent bed with the technique of the prior art is: Etot = E1 + E2 + E3 + E4 = 1.77 + 1.47 + 5.92 + 10.33 = 19.49 kW.

The percentage savings that can be obtained in the heating regeneration phase with the new pneumatic compensation system is therefore approximately:
RE = 1.77 / 19.49 x 100 = 9%

Similar savings can be obtained in the cooling phase.

Assuming that the cooling takes place using a chiller with COP = 2.2 (typical value in existing industrial plants), the energy required for cooling the ballast becomes:
Elcool = 1.77 / 2.2 = 0.8 kW

The total energy that can therefore be saved by using the new compensation system is:
Ereg = 1.77+ 0.8 = 2.57 kW

Considering an average of 2 regenerations per day, the overall savings over a year can be assumed as follows:
Etotreg = 2.57 x 2 x 360 = 1.85 MW/year

A similar reduction is also obtained in the cycle times, so that a complete regeneration cycle lasting about 150' can generally be reduced by about 15'.

## Claims

1. Compensation system for adsorbent and/or filtering beds (4), for dehumidification and/or filtration systems of a process fluid (W), comprising:
- at least one tower (5) for treating said fluid (W), containing at least one bed of adsorbent and/or filtering material (4);
- means for introducing said fluid (W) into said at least one tower (5);
- means for discharging said fluid (W) from said at least one tower (5);
- means for conveying said process fluid (W) inside said at least one tower (5) through said bed of adsorbent and/or filtering material (4);
- at least one compensation device (6) for stabilizing said bed of adsorbent or filtering material (4),
**characterized in that** said at least one compensation device (6) is located inside said tower (4), and wherein said at least one compensation device (6) is pneumatic or fluid-dynamic in general, and is configured to directly or indirectly exercise defined pressure values on said bed of adsorbent and/or filtering material (4).

2. Compensation system according to claim 1, **characterized in that** it comprises means for regulating the pressure with which said compensation device (6) acts on said at least one bed of adsorbent and/or filtering material (4).

3. Compensation system according to claims 1, 2 **characterized in that** said compensation device (6) comprises at least one inflatable element (6a, 6b) and means for regulating the pressure inside said at least one inflatable element (6a, 6b).

4. Compensation system according to claim 3 **characterized in that** said inflatable element (6a) has a discoidal shape.

5. Compensation system according to claim 3, **characterized in that** said inflatable element (6b) has a toroidal shape.

6. Compensation system according to claim 4 or 5, **characterized in that** said inflatable element (6a, 6b) is configured to be housed inside said at least one tower (5) in the compartment (51) above or below said bed of adsorbent and/or filtering material (4).

7. Compensation system according to claims 1, 2 **characterized in that** said compensation device (6) comprises at least one movable head (6c) inside said at least one tower (5) which directly or indirectly rests on said bed of adsorbent and/or filtering material (4), and at least one pneumatic cylinder (61c) which acts on said movable head (6c) by applying said defined pressure values.

8. Compensation system according to claims 1, 2 **characterized in that** said compensation device (6) comprises at least one mobile head (6c) inside said at least one tower (5) which directly or indirectly rests on said bed of adsorbent and/or filtering material (4), and at least one inflatable element (6a) which exerts its effect on said mobile head (6c) by applying said defined pressure values.

9. Compensation system according to claim 1, **characterized in that** said compensation device (6) comprises:
• at least one membrane (6d) which delimits, inside said at least one tower (5), in a compartment (51) above or below said bed of adsorbent and/or filtering material (4), at least one pressurized chamber (52);
• means for regulating the pressure inside said at least one chamber (52).

10. Compensation system according to any of the preceding claims, **characterized in that** said compensation device (6) is operated by compressed air (17).

11. Compensation system according to any of the preceding claims **characterized in that** said compensation device (6) is activated by a pressurized fluid (16a) supplied by one or more pumps (18, 19, 40).

12. Compensation system according to the preceding claim, **characterized in that** said pump which supplies said pressurized fluid (16a) to said compensation device (6) is the pump of a dryer (1) for the dehumidification of the process fluid in a plant for the dehumidification of plastic granules.

13. Compensation system according to any of the preceding claims, **characterized in that** it comprises at least one pressure gauge (8), to measure the pressure value exerted by said compensation device (6) on said bed of adsorbent and/or filtering material (4).

14. Compensation system according to any of the preceding claims **characterized in that** it comprises at least one discharge valve (9, 10) for regulating said pressure value acting on said bed of adsorbent and/or filtering material (4).
